# EUROPEAN PATENT SPECIFICATION

(11) **EP 2 354 956 B1**
(45) Date of publication and mention of the grant of the patent: **03.10.2012**
(21) Application number: 11151378.4
(22) Date of filing: 19.01.2011
(51) Int. Cl.: G06F 13/12

(54) **Method for controlling network controller, program, and information processing apparatus**
Verfahren zur Steuerung einer Netzwerksteuerung, Programm und Informationsverarbeitungsvorrichtung
Procédé de contrôle d'un contrôleur de réseau, programme et appareil de traitement d'informations

(30) Priority: 19.01.2010 JP 2010009449
(43) Date of publication of application: 10.08.2011
(73) Proprietor: FUJITSU LIMITED, Kawasaki-shi, Kanagawa 211-8588 (JP)
(72) Inventor: Tachibana, Masazumi, Kawasaki-shi Kanagawa 211-8588 (JP)
(74) Representative: Stebbing, Timothy Charles

(56) References cited:
- US-A1- 2006 047 941
- US-A1- 2008 263 327
- US-B1- 7 363 480

## Description

### FIELD

A certain aspect of the embodiments discussed herein is related to a method for controlling a network controller, a program, and an information processing apparatus.

### BACKGROUND

Each of a personal computer and a server according to conventional architecture of Intel Corporation includes initialization and diagnosis functions of a system, and an OS (Operating System) boot function by firmware that is called BIOS (Basic Input Output System). However, in recent years, firmware that is called EFI (Extensible Firmware Interface) which has enhanced the BIOS is widespread. For example, a document 1 (Japanese Laid-Open Patent Application No. 2008-102906) is known as the construction of a system using the EFI.

To boot (start up) an OS with the EFI, the OS corresponding to the EFI is required. For example, Windows server 2008 corresponding to the EFI cannot be booted with the conventional BIOS (hereinafter referred to as "the legacy BIOS"). On the contrary, Windows server 2003 and Red Hat Linux 5 (hereinafter referred to as "the legacy OSs") which do not correspond to the EFI cannot be booted with the EFI. To support these conventional legacy OSs widely, a module (hereinafter referred to as "the CSM (Compatibility Support Module)") that has a BIOS compatibility function to be installed in the EFI is developed.

Incidentally, a computer system of the EFI base which has installed the conventional CSM includes only a function for enabling or disabling a particular LAN (Local Area Network) controller, and a function for selecting whether to control the entire enabled LAN controller by the EFI or the legacy BIOS. Consequently, when the EFI fails in the network boot, and the legacy BIOS executes the network boot, for example, a device executing the network boot is required to execute reboot, setting change, and reboot.

### SUMMARY

The present invention has been made in view of those circumstances, and an object thereof is to provide a method for controlling a network controller, a program, and an information processing apparatus that can prevent a network controller controlling driver for EFI and a network controller controlling driver for legacy BIOS from redundantly initializing a single network controller.

According to an aspect of the present invention, there is provided a method for controlling a network controller, including: executing a network controller assignment controlling driver before at least one of a network controller controlling driver for EFI and a network controller controlling driver for legacy BIOS initializes the network controller, the network controller assignment controlling driver deciding whether to operate the network controller by either of the EFI or the legacy BIOS, based on preset setting data of the network controller; and exclusively acquiring a driver providing a protocol used for initialization of the network controller by the network controller assignment controlling driver when the setting data of the network controller is an instruction to initialize the network controller for the legacy BIOS.

### BRIEF DESCRIPTION OF DRAWINGS

FIG. 1 is a diagram illustrating a computer system of an EFI (Extensible Firmware Interface) base which has installed a CSM (Compatibility Support Module);
FIG. 2 is a flowchart illustrating processes executed with a network boot executing server at the time of failure of network boot;
FIG. 3 is a diagram illustrating schematic construction of the network boot executing server;
FIG. 4 is a diagram illustrating a connection process of the EFI;
FIG. 5 is a diagram illustrating schematic construction of an information processing apparatus;
FIG. 6 is an explanatory diagram illustrating the operation of the information processing apparatus;
FIG. 7 is an explanatory diagram illustrating the operation of the information processing apparatus;
FIG. 8 is an explanatory diagram illustrating the operation of the information processing apparatus;
FIG. 9 is an explanatory diagram illustrating the operation of the information processing apparatus; and
FIG. 10 is a flowchart illustrating the connection process executed by a LAN controller assignment controlling driver.

### DESCRIPTION OF EMBODIMENTS

A description will now be given, with reference to the accompanying drawings, of an exemplary embodiment.

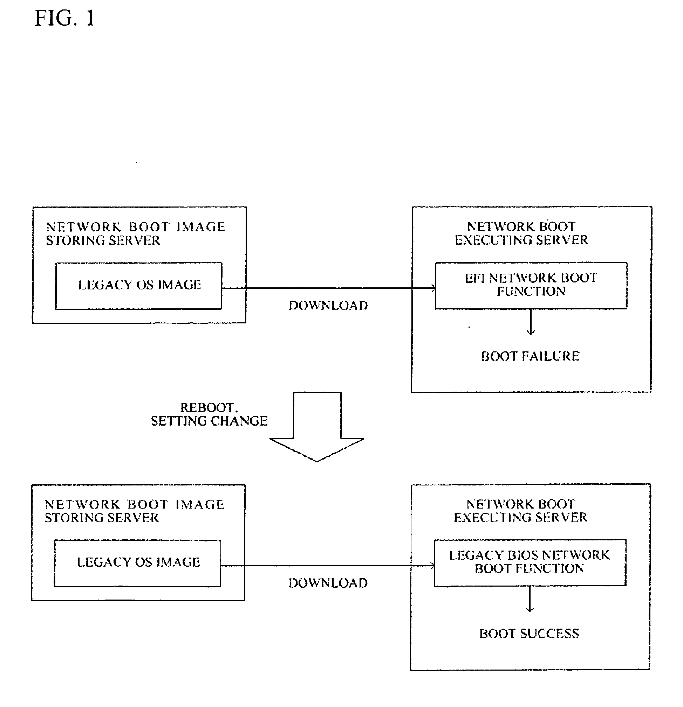

First, a description will now be given, with reference to FIGs. 1 to 4, of a reference example.

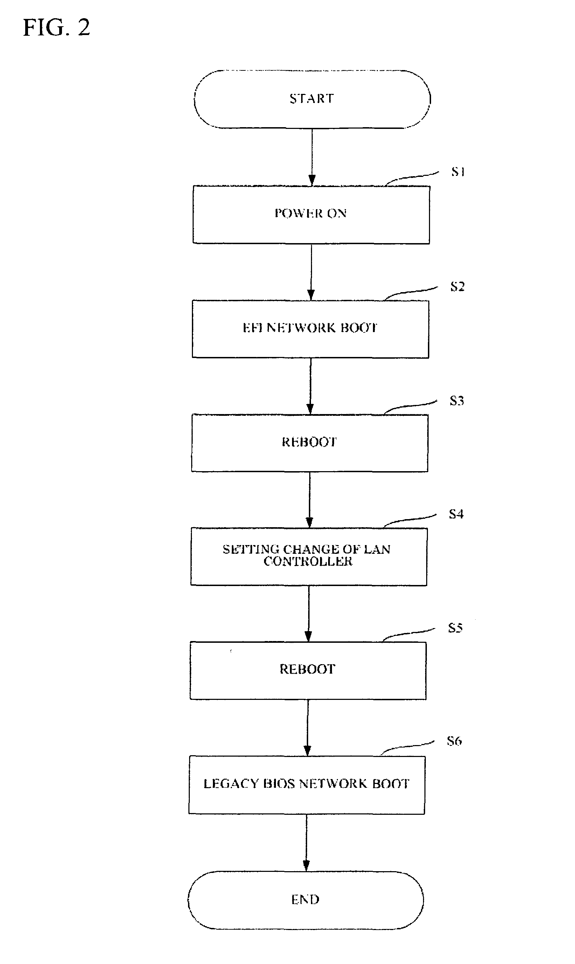

FIG. 1 illustrates a computer system of an EFI (Extensible Firmware Interface) base which has installed a CSM (Compatibility Support Module). FIG. 2 illustrates processes executed with a network boot executing server at the time of failure of network boot. The computer system of FIG. 1 includes a network boot image storing server and a network boot executing server. In the network boot image storing server, an image of the legacy OS is stored. The image of the legacy OS is an image that cannot be booted with a network boot function of the EFI. It is assumed that the network boot executing server executes the network boot in the order of EFI network boot and legacy network boot.

In FIG. 2, when the network boot executing server is powered on (step S1), the network boot executing server boots the image of the legacy OS with the network boot function of the EFI (step S2). However, the network boot executing server fails in the boot. Consequently, the network boot executing server executes reboot (step S3). A user changes setting of a LAN controller of the network boot executing server from setting for the EFI network boot to setting for legacy network boot (step S4). Then, the network boot executing server executes reboot (step S5). Thereby, the network boot executing server boots the image of the legacy OS with the network boot function of the legacy BIOS (step S6). Thus, the reason why the network boot executing server executes the reboot, the setting change, and the reboot is that a LAN controller controlling driver for legacy BIOS and a LAN controller controlling driver for EFI separately exist, and there is a case where the respective drivers control a single LAN controller at the same time.

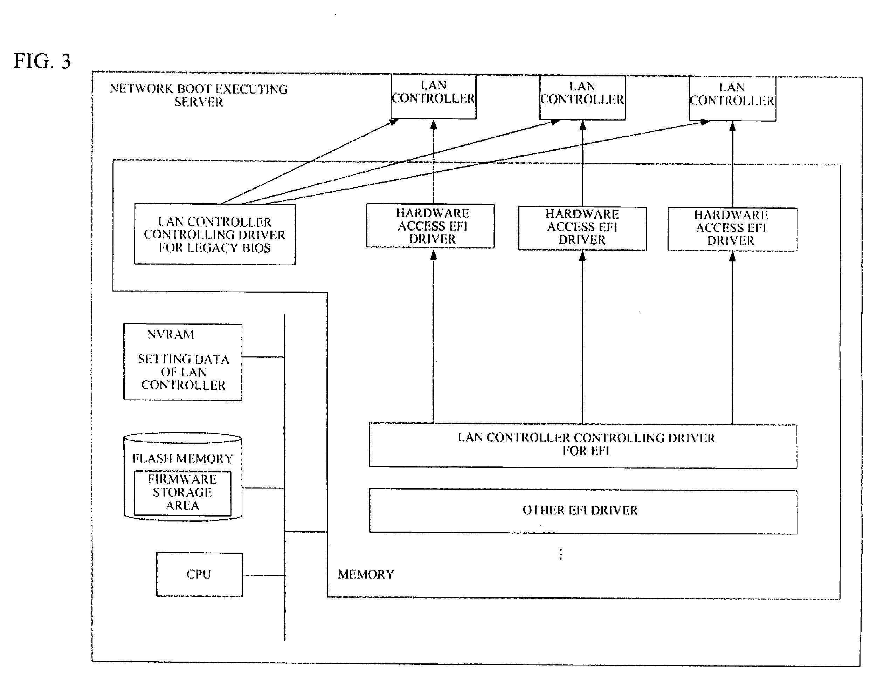

FIG. 3 is a diagram illustrating schematic construction of the network boot executing server. In FIG. 3, the network boot executing server includes a CPU (Central Processing Unit), a flash memory, a NVRAM (Non Volatile Random Access Memory), a memory, and LAN controllers. In the memory, the LAN controller controlling driver for legacy BIOS, hardware access EFI drivers, the LAN controller controlling driver for EFI, and other EFI driver are expanded.

The LAN controller controlling driver for EFI controls the LAN controllers via the hardware access EFI drivers. In the EFI, when any LAN controller controlling driver for EFI sets a hardware access EFI driver to a controlled object, another LAN controller controlling driver for EFI includes a mechanism (i.e., a connection process described later) that cannot set the same hardware access EFI driver to the controlled object. When the LAN controller controlling driver for EFI initializes the LAN controller, hardware setting and setting of the EFI suitable for the operation by the EFI are executed. Similarly, when the LAN controller controlling driver for legacy BIOS initializes the LAN controller, hardware setting suitable for the operation by the legacy BIOS is executed. Then, the LAN controller controlling driver for legacy BIOS and the LAN controller controlling driver for EFI do not recognize each other, and initialize the LAN controller. Consequently, when the LAN controller controlling driver for EFI initializes the LAN controller, and then the LAN controller controlling driver for legacy BIOS initializes the same LAN controller, for example, hardware setting previously set for the EFI cannot operate. Therefore, there is a possibility that the system included in the network boot executing server becomes unstable, and this causes a state where the operation of the network boot executing server cannot be secured.

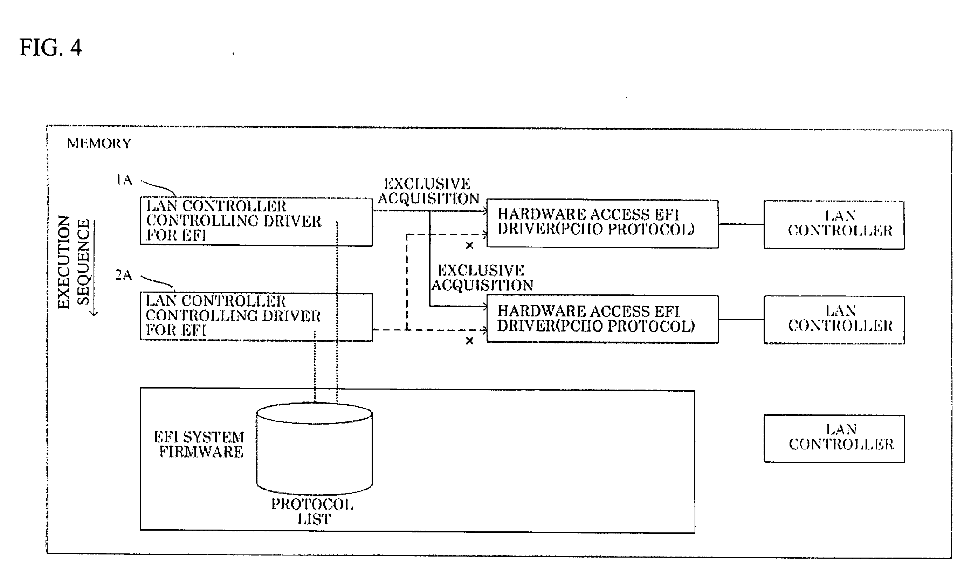

FIG. 4 is a diagram illustrating the connection process of the EFI. The connection process is a process in which an EFI system firmware connects controls between drivers (e.g. the LAN controller controlling driver for EFI, and the hardware access EFI driver (PciIo protocol) ) by using a function "Connect Controller" of the EFI. The EFI has the connection process as a basic function.

In FIG. 4, when LAN controller controlling drivers for EFI are expanded in the memory, the LAN controller controlling drivers for EFI are stored into a protocol list of the EFI system firmware. In the connection process, the EFI system firmware inspects whether each LAN controller controlling driver for EFI can control each LAN controller. When the LAN controller controlling driver for EFI can control the LAN controller, the LAN controller controlling driver for EFI exclusively acquires a hardware access EFI driver (PciIo protocol) corresponding to the LAN controller. Thereby, another LAN controller controlling driver for EFI cannot sets the same hardware access EFI driver (PciIo protocol) to the controlled object. It is assumed that this state where the hardware access EFI driver (PciIo protocol) is exclusively acquired is called "connection completion". It should be noted that the function of the EFI can control the order of the LAN controller controlling drivers for EFI performing the connection process. In FIG. 4, the EFI system firmware inspects whether the LAN controller controlling driver for EFI 1A is set above the LAN controller controlling driver for EFI 2A, and can be connected to the LAN controller.

Usually, the EFI has a mechanism that two or more drivers cannot redundantly control a single hardware by the connection process. However, the LAN controller controlling driver for legacy BIOS directly controls the LAN controller without using the functions of the EFI. Therefore, the LAN controller controlling driver for EFI may redundantly initialize the LAN controller which the LAN controller controlling driver for legacy BIOS has already initialized. On the other hand, the LAN controller controlling driver for EFI initializes only the LAN controller required for the boot of the OS. Therefore, when the LAN controller controlling driver for legacy BIOS initializes another LAN controller, the drivers do not redundantly initialize the single LAN controller. As a result, each LAN controller can normally operate.

However, in EFI, a setup menu that displays a list of devices capable of booting the OSs exists in the network boot executing server. Therefore, to create the list of devices capable of booting the OSs, the EFI system firmware needs to connect the LAN controller controlling driver for EFI to all of the LAN controllers. This is called "Connect-All". In the Connect-All, the LAN controller controlling driver for EFI sets all of the LAN controllers to the controlled objects. When the LAN controller controlling driver for legacy BIOS initializes a certain LAN controller after or before the Connect-All is executed, the LAN controller is initialized twice. Therefore, there is a possibility that the system included in the network boot executing server becomes unstable, and this causes a state where the operation of the network boot executing server cannot be secured. Further, in EFI, a user can manually cause the network boot executing server to execute the Connect-All from an interface that is called EFI SHELL, and hence it is likely to easily enter a state where the LAN controller is redundantly initialized.

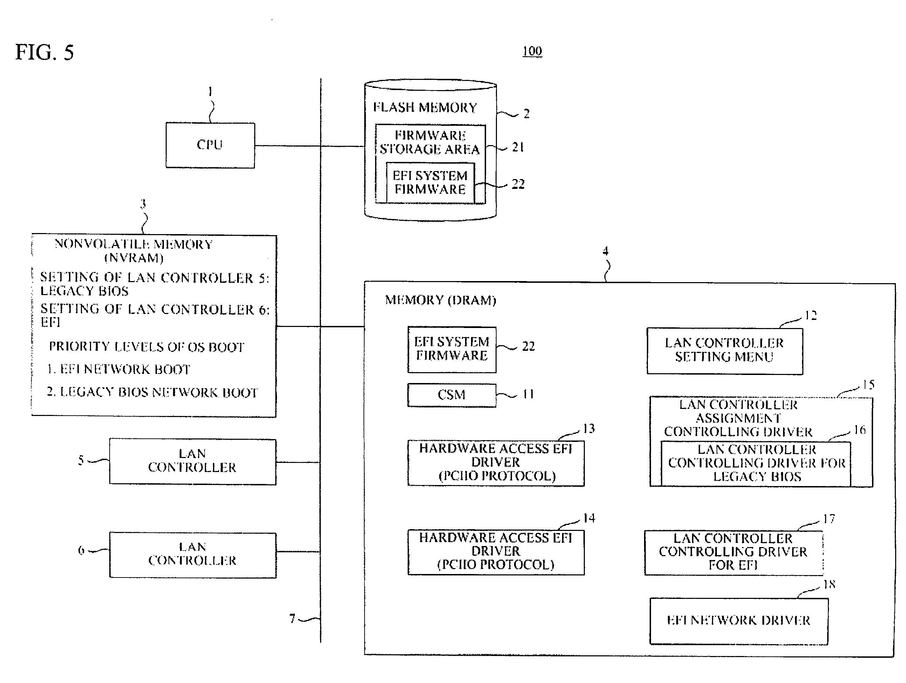

Next, a description will now be given, with reference to FIGs. 5 to 10, of an exemplary embodiment.

FIG. 5 is a diagram illustrating schematic construction of an information processing apparatus according to the present embodiment. An information processing apparatus 100 in FIG. 5 is a computer such as a server or a client, and executes network boot. The network boot is one of methods for starting up or booting an OS (Operating System), and boots the OS by downloading an image of the OS via a network.

The information processing apparatus 100 includes: a CPU 1; a flash memory 2; a nonvolatile memory (NVRAM; Non volatile RAM) 3; a memory (DRAM; Dynamic Random Access Memory) 4; and LAN (Local Area Network) controllers 5 and 6. The CPU 1 is coupled to the flash memory 2, the nonvolatile memory 3, the memory 4, and the LAN controllers 5 and 6 via a bus 7.

The CPU 1 controls the whole operation of the information processing apparatus 100. The flash memory 2 includes a firmware storage area 21. In the firmware storage area 21, an EFI (Extensible Firmware Interface) system firmware 22 is stored. Moreover, the flash memory 2 includes a CSM (Compatibility Support Module) 11, a LAN controller setting menu 12, hardware access EFI drivers (PciIo protocol) 13 and 14, and a LAN controller assignment controlling driver 15. The flash memory 2 further includes a LAN controller controlling driver for legacy BIOS 16, a LAN controller controlling driver for EFI 17, and an EFI network driver 18.

The CSM 11 is a module that has a BIOS compatibility function. The LAN controller setting menu 12 is a menu for setting the LAN controller controlling drivers which uses the LAN controllers 5 and 6. The hardware access EFI drivers (PciIo protocol) 13 and 14 provide protocols used for the initialization of the LAN controllers 5 and 6. The LAN controller assignment controlling driver 15 decides the LAN controller controlling drivers that control the LAN controllers 5 and 6. The LAN controller controlling driver for legacy BIOS 16 initializes the LAN controller by using the legacy BIOS, and controls the LAN controller. The LAN controller controlling driver for EFI 17 initializes the LAN controller by using a PciIo protocol which the hardware access EFI driver provides, and controls the LAN controller. The EFI network driver 18 is a driver for packet communication.

The nonvolatile memory 3 stores setting whether each of the LAN controller 5, 6 is used by the legacy BIOS or the EFI. Moreover, the nonvolatile memory 3 stores setting of priority levels of OS boot. In FIG. 5, as the priority levels of the OS boot, the EFI network boot is first set, and then the legacy BIOS network boot is set. The memory 4 functions as a working area. The LAN controllers 5 and 6 are LAN ports, and are connected to a server storing an OS image for the network boot, via a network, not shown. The information processing apparatus 100 may include one or more LAN controllers, and the number of LAN controllers is not limited to two.

When the information processing apparatus 100 is turned on, the CPU 1 reads out the EFI system firmware 22, and expands the EFI system firmware 22 into the memory 4. The EFI system firmware 22 expands the CSM 11, the LAN controller setting menu 12, the hardware access EFI drivers (PciIo protocol) 13 and 14, the LAN controller assignment controlling driver 15, the LAN controller controlling driver for EFI 17, and the EFI network driver 18 into the memory 4 according to the control of the CPU 1, as shown in FIG. 5. The EFI system firmware 22 expands the hardware access EFI drivers (PciIo protocol) into the memory 4 depending on the number of LAN controllers. The LAN controller assignment controlling driver 15 expands the LAN controller controlling driver for legacy BIOS 16 into the memory 4 if necessary.

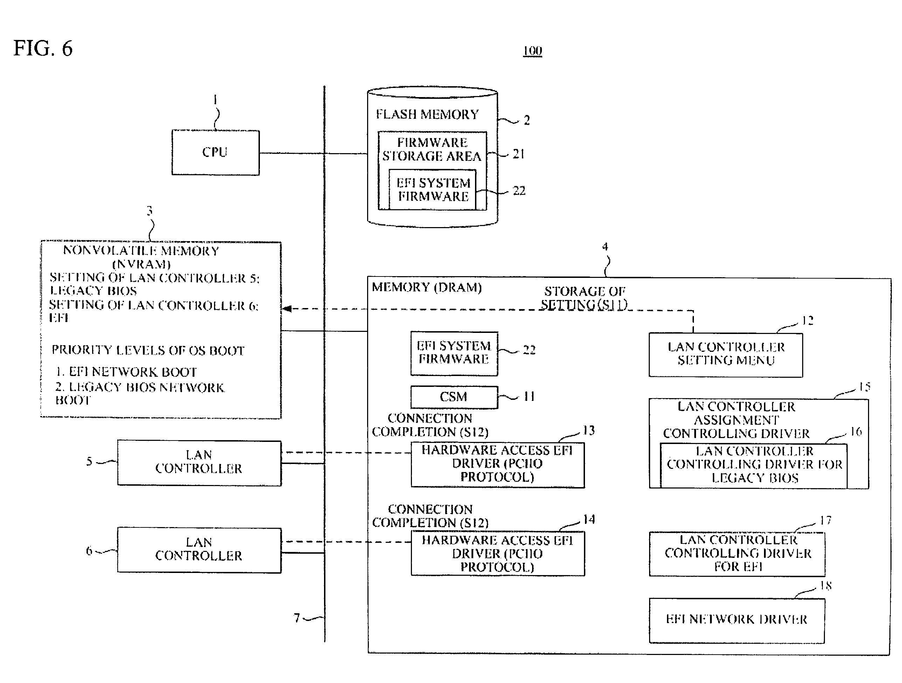

A description will now be given, with reference to FIGs. 6 to 9, of the operation of the information processing apparatus 100, i.e., a setup process, a connection process, and a network boot process executed with the information processing apparatus 100. Here, it is assumed that the EFI system firmware 22, the CSM 11, the LAN controller setting menu 12, and various drivers are expanded into the memory 4.

(Setup process) In FIG. 6, the LAN controller setting menu 12 first stores setting whether to use the LAN controllers 5 and 6 by the legacy BIOS or the EFI, into the nonvolatile memory 3 according to user's instruction (S 11). This setting is reflected by the reset of the information processing apparatus 100. Further, the LAN controller setting menu 12 sets the priority levels of the OS boot to the nonvolatile memory 3 according to the user's instruction. In an initialization process on startup of the information processing apparatus 100, the EFI system firmware 22 assigns the hardware access EFI drivers (PciIo protocol) 13 and 14 to the LAN controllers 5 and 6, respectively (S 12).

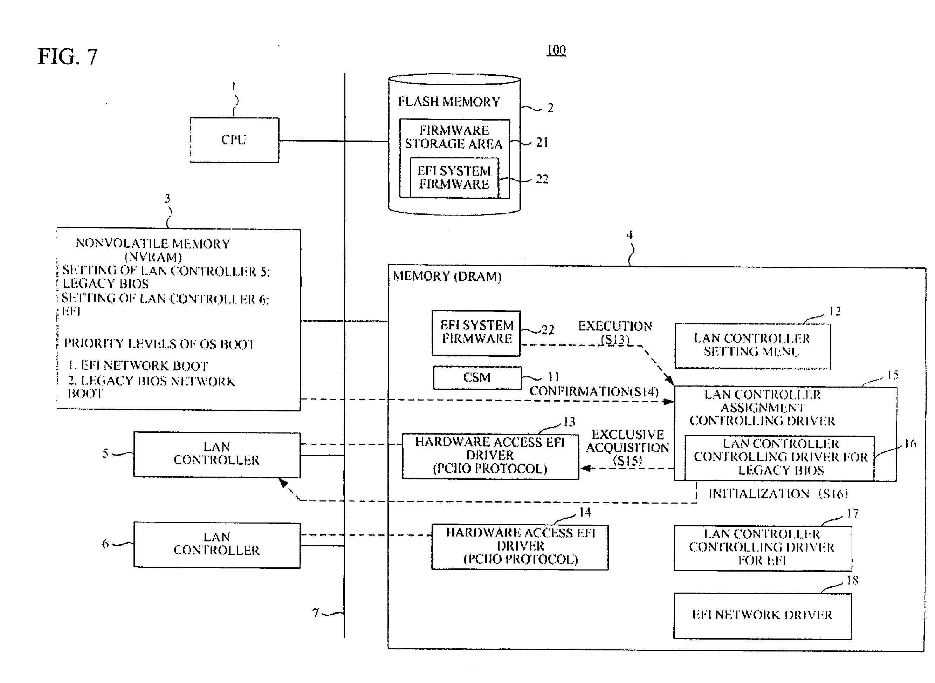

(Connection process to the LAN controller 5) Next, in FIG. 7, the connection process to the LAN controller 5 is executed. Specifically, the EFI system firmware 22 executes the LAN controller assignment controlling driver 15 with highest priority (S13). The LAN controller assignment controlling driver 15 refers to the nonvolatile memory 3, and confirms that the setting of the LAN controller 5 is an instruction for initializing the LAN controller 5 for the legacy BIOS (S 14).

The LAN controller assignment controlling driver 15 exclusively acquires the hardware access EFI driver (PciIo protocol) 13 (S15). More specifically, the LAN controller assignment controlling driver 15 specifies an attribute of the hardware access EFI driver (PciIo protocol) 13 by OPEN_BY_DRIVER, specifying an attribute of the driver, which is included in Open Protocol provided beforehand by the function of the EFI, so that the LAN controller assignment controlling driver 15 acquires the hardware access EFI driver (PciIo protocol) 13. Here, exclusively acquiring the hardware access EFI driver (PciIo protocol) 13 means that the hardware access EFI driver (PciIo protocol) 13 is not acquired afterward by another driver such as the LAN controller controlling driver for EFI 17. The LAN controller assignment controlling driver 15 executes the LAN controller controlling driver for legacy BIOS 16. The LAN controller controlling driver for legacy BIOS 16 initializes the LAN controller 5 by using the legacy BIOS (S 16). The connection process is terminated.

Then, when the EFI system firmware 22 executes the LAN controller controlling driver for EFI 17, the LAN controller controlling driver for EFI 17 does not acquire the hardware access EFI driver (PciIo protocol) 13. This is because the hardware access EFI driver (PciIo protocol) 13 has been already acquired by the LAN controller assignment controlling driver 15. Therefore, the LAN controller controlling driver for EFI 17 does not set the hardware access EFI driver (PciIo protocol) 13 to the controlled object.

As described above, the LAN controller assignment controlling driver 15 exclusively acquires the hardware access EFI driver (PciIo protocol) 13. However, when the setting in which the LAN controller 6 is used by the legacy BIOS, and the setting in which the LAN controller 5 is used by the EFI are stored into the nonvolatile memory 3, the LAN controller assignment controlling driver 15 exclusively acquires the hardware access EFI driver (PciIo protocol) 14. That is, the LAN controller assignment controlling driver 15 changes the hardware access EFI driver (PciIo protocol) to be acquired depending on the setting of the LAN controllers 5 and 6.

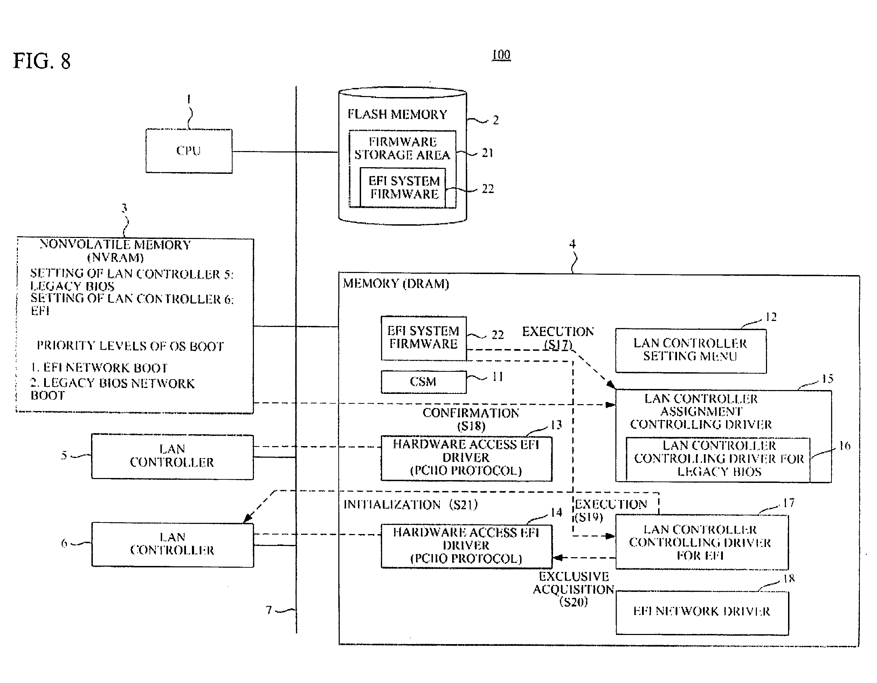

(Connection process to the LAN controller 6) Next, in FIG. 8, the connection process to the LAN controller 6 is executed. Specifically, the EFI system firmware 22 executes the LAN controller assignment controlling driver 15 with highest priority (S 17).
The LAN controller assignment controlling driver 15 refers to the nonvolatile memory 3, and confirms that the setting of the LAN controller 6 is an instruction for initializing the LAN controller 6 for the EFI (S 18). Since the setting of the LAN controller 6 is not the instruction for initializing the LAN controller 6 for the legacy BIOS, the LAN controller assignment controlling driver 15 does not exclusively acquire the hardware access EFI driver (PciIo protocol) 14. The connection process is terminated.

Next, the EFI system firmware 22 executes the LAN controller controlling driver for EFI 17 (S 19). The LAN controller controlling driver for EFI 17 specifies an attribute of the hardware access EFI driver (PciIo protocol) 14 by OPEN_BY_DRIVER, specifying an attribute of the driver, which is included in Open Protocol provided beforehand by the function of the EFI, so that the LAN controller controlling driver for EFI 17 exclusively acquires the hardware access EFI driver (PciIo protocol) 14 (S20). The LAN controller controlling driver for EFI 17 initializes the LAN controller 6 by using the PciIo protocol (S21). Here, when the setting in which the LAN controller 6 is used by the legacy BIOS, and the setting in which the LAN controller 5 is used by the EFI are stored into the nonvolatile memory 3, the LAN controller controlling driver for EFI 17 exclusively acquires the hardware access EFI driver (Pcilo protocol) 13.

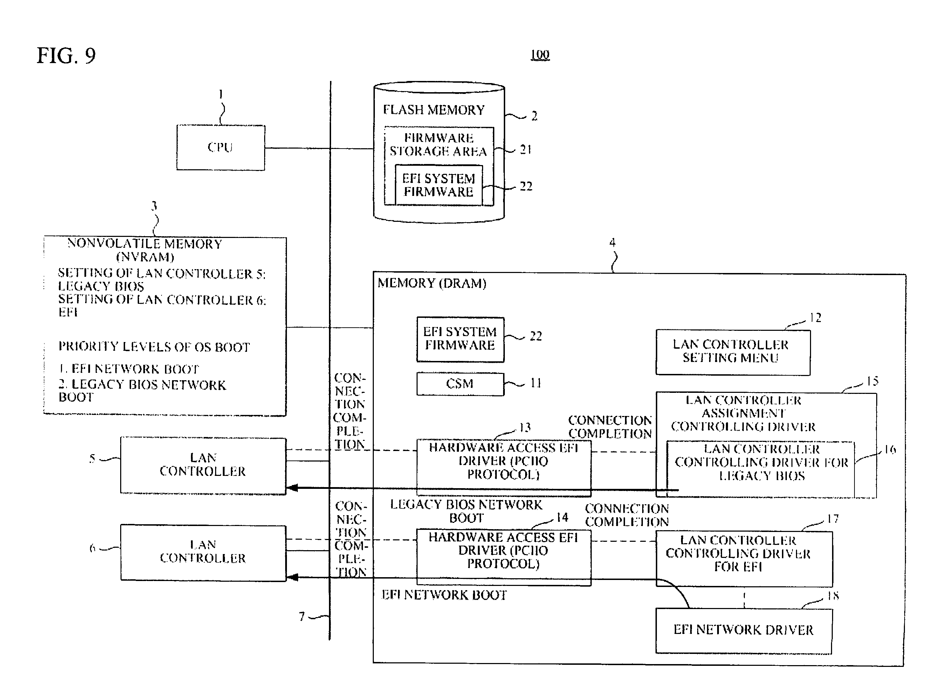

(Network boot process) In FIG. 9, when the connection processes to the LAN controllers 5 and 6 are terminated, the EFI system firmware 22 switches the LAN controller initialized by the LAN controller controlling driver for EFI 17 and the LAN controller initialized by the LAN controller controlling driver for legacy BIOS 16 according to the priority levels of the OS boot in the nonvolatile memory 3, and executes the network boot. In this case, the LAN controller controlling driver for legacy BIOS 16 and the LAN controller controlling driver for EFI 17 do not redundantly initialize the single LAN controller, and hence the reboot and/or the setting change of the information processing apparatus 100 are not required.

In the legacy BIOS network boot, the CSM 11 acquires a BEV (Boot Entry Vector) entry from a PnP (Plug and Play) extension header that can be acquired when the LAN controller controlling driver for legacy BIOS 16 is initialized, and executes the entry point of the BEV entry. Thereby, the EFI system firmware 22 executes the network boot via the LAN controller 5 initialized by the LAN controller controlling driver for legacy BIOS 16.

In the EFI network boot, the EFI network driver 18 loads the OS image for the network boot from the server storing OS images, and executes the entry point of the OS image. Thereby, the EFI system firmware 22 executes the network boot via the LAN controller 6 initialized by the LAN controller controlling driver for EFI 17.

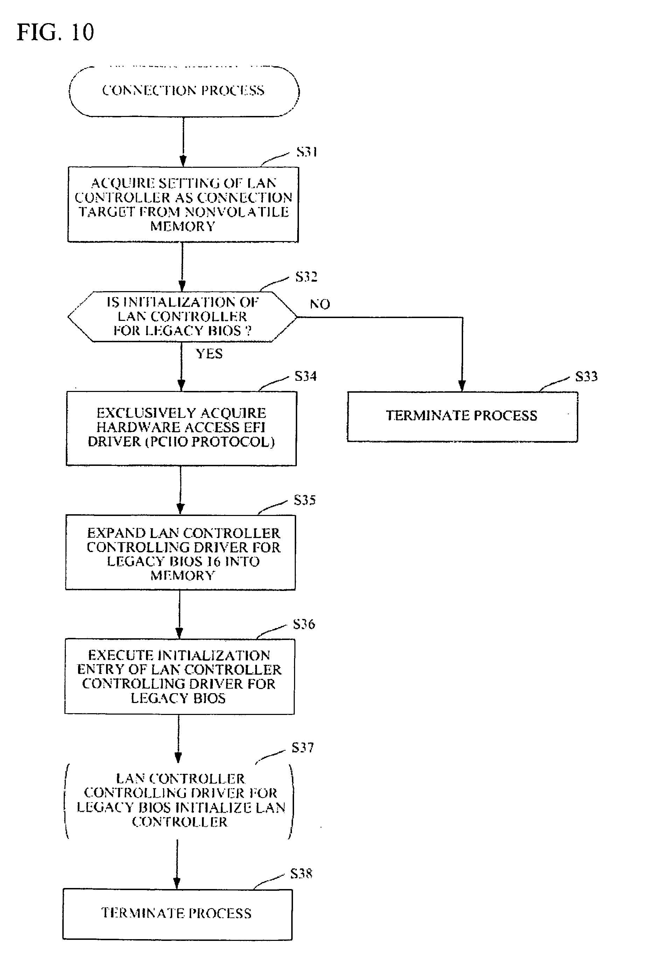

FIG. 10 is a flowchart illustrating the connection process executed by the LAN controller assignment controlling driver 15.

The LAN controller assignment controlling driver 15 acquires setting of the LAN controller as a connection target from the nonvolatile memory 3 (S31). The LAN controller assignment controlling driver 15 judges whether the acquired setting of the LAN controller as the connection target is an instruction to initialize the LAN controller for the legacy BIOS (S32). When the acquired setting of the LAN controller as the connection target is not the instruction to initialize the LAN controller for the legacy BIOS (NO in S32), the LAN controller assignment controlling driver 15 terminates the connection process (S33). When the acquired setting of the LAN controller as the connection target is the instruction to initialize the LAN controller for the legacy BIOS (YES in S32), the LAN controller assignment controlling driver 15 exclusively acquires the hardware access EFI driver (PciIo protocol) assigned to the LAN controller as the connection target (S34).

Next, the LAN controller assignment controlling driver 15 expands the LAN controller controlling driver for legacy BIOS 16 into the memory 4 (S35). The LAN controller assignment controlling driver 15 executes initialization entry of the LAN controller controlling driver for legacy BIOS 16 (S36). By the procedure of S36, the LAN controller controlling driver for legacy BIOS 16 initializes the LAN controller as the connection target (S37). Then, the LAN controller assignment controlling driver 15 terminates the connection process (S38).

As described above, according to the present embodiment, when the LAN controller 5 is initialized for the legacy BIOS, the LAN controller assignment controlling driver 15, which preferentially boots, exclusively acquires the hardware access EFI driver (PciIo protocol) 13 that provides a protocol used for the initialization of the LAN controller 5, and hence the LAN controller controlling driver for EFI 17 cannot acquire the hardware access EFI driver (PciIo protocol) 13. Therefore, the LAN controller controlling driver for legacy BIOS 16 and the LAN controller controlling driver for EFI 17 can be prevented from redundantly initializing the single LAN controller. Moreover, according to the present embodiment, even when the LAN controller controlling driver for legacy BIOS 16 and the LAN controller controlling driver for EFI 17 exist on the memory 4 together, the EFI network boot and the legacy BIOS network boot can be switched without the reboot and/or the setting change of the information processing apparatus 100.

A computer may execute a software program for realizing the functions of the information processing apparatus 100. In this manner, the same effects as those of the above described embodiment can also be achieved.

## Claims

1. A method for controlling a network controller, comprising:
executing a network controller assignment controlling driver (15) before at least one of a network controller controlling driver for EFI (17) and a network controller controlling driver for legacy BIOS (16) initializes the network controller (5, 6), the network controller assignment controlling driver deciding whether to operate the network controller by either of the EFI or the legacy BIOS, based on preset setting data of the network controller; and
exclusively acquiring a driver (13, 14) providing a protocol used for initialization of the network controller by the network controller assignment controlling driver when the setting data of the network controller is an instruction to initialize the network controller for the legacy BIOS.

2. The method for controlling a network controller according to claim 1, wherein:
when the setting data of the network controller is an instruction to initialize the network controller for the EFI, the network controller controlling driver for EFI acquires the driver providing the protocol, and initializes the network controller,
when the setting data of the network controller is the instruction to initialize the network controller for the legacy BIOS, the network controller controlling driver for legacy BIOS initializes the network controller, and
an EFI system firmware (22) switches the network controller initialized by the network controller controlling driver for EFI and the network controller initialized by the network controller controlling driver for legacy BIOS according to preset priority levels of boot, and executes network boot.

3. A program causing a computer to execute a process for controlling a network controller, the process comprising:
executing a network controller, assignment controlling driver (15) before at least one of a network controller controlling driver for EFI (17) and a network controller controlling driver for legacy BIOS (16) initializes the network controller (5, 6), the network controller assignment controlling driver deciding whether to operate the network controller by either of the EFI or the legacy BIOS, based on preset setting data of the network controller; and
exclusively acquiring a driver (13, 14) providing a protocol used for initialization of the network controller by the network controller assignment controlling driver when the setting data of the network controller is an instruction to initialize the network controller for the legacy BIOS.

4. The program according to claim 3, wherein:
when the setting data of the network controller is an instruction to initialize the network controller for the EFI, the network controller controlling driver for EFI acquires the driver providing the protocol, and initializes the network controller,
when the setting data of the network controller is the instruction to initialize the network controller for the legacy BIOS, the network controller controlling driver for legacy BIOS initializes the network controller, and
an EFI system firmware (22) switches the network controller initialized by the network controller controlling driver for EFI and the network controller initialized by the network controller controlling driver for legacy BIOS according to preset priority levels of boot, and executes network boot.

5. An information processing apparatus, comprising:
a network controller assignment controlling driver (15) that is executed before at least one of a network controller controlling driver for EFI (17) and a network controller controlling driver for legacy BIOS (16) initializes the network controller (5, 6), and that decides whether to operate the network controller by either of the EFI or the legacy BIOS, based on preset setting data of the network controller;
wherein the network controller assignment controlling driver exclusively acquires a driver (13, 14) providing a protocol used for initialization of the network controller when the setting data of the network controller is an instruction to initialize the network controller for the legacy BIOS.

6. The information processing apparatus according to claim 5, wherein:
when the setting data of the network controller is an instruction to initialize the network controller for the EFI, the network controller controlling driver for EFI acquires the driver providing the protocol, and initializes the network controller,
when the setting data of the network controller is the instruction to initialize the network controller for the legacy BIOS, the network controller controlling driver for legacy BIOS initializes the network controller, and
an EFI system firmware (22) switches the network controller initialized by the network controller controlling driver for EFI and the network controller initialized by the network controller controlling driver for legacy BIOS according to preset priority levels of boot, and executes network boot.

## Patentansprüche

1. Verfahren zum Steuern eines Netzwerkcontrollers, umfassend:
Ausführen eines Netzwerkcontroller-Zuweisungs-Steuertreibers (15), bevor ein Netzwerkcontroller-Steuertreiber für EFI (17) und/oder ein Netzwerkcontroller-Steuertreiber für herkömmliches BIOS (16) den Netzwerkcontroller (5, 6) initialisiert, wobei der Netzwerkcontroller-Zuweisungssteuertreiber entscheidet, ob der Netzwerkcontroller entweder durch das EFI oder das herkömmliche BIOS zu betreiben ist, basierend auf voreingestellten Einstelldaten des Netzwerkcontrollers; und
exklusives Ermitteln eines Treibers (13, 14) der ein zur Initialisierung des Netzwerkcontrollers durch den Netzwerkcontroller-Zuweisungssteuertreiber verwendetes Protokoll bereitstellt, wenn die Einstelldaten des Netzwerkcontrollers eine Anweisung zur Initialisierung des Netzwerkcontrollers für das herkömmliche BIOS sind.

2. Verfahren zum Steuern eines Netzwerkcontrollers gemäß Anspruch 1, wobei:
wenn die Einstelldaten der Netzwerkcontroller eine Anweisung zur Initialisierung der Netzwerkcontroller für das EFI sind, der Netzwerkcontroller-Steuertreiber für EFI den das Protokoll bereitstellenden Treiber ermittelt und den Netzwerkcontroller initialisiert,
wenn die Einstelldaten des Netzwerkcontrollers eine Anweisung zur Initialisierung des Netzwerkcontrollers für das herkömmliche BIOS sind, der Netzwerkcontroller-Steuertreiber für das herkömmliche BIOS den Netzwerkcontroller initialisiert, und
eine EFI-System-Firmware (22), den durch den Netzwerkcontroller-Steuertreiber für EFI initialisierten Netzwerkcontroller und den durch den Netzwerkcontrollers-Steuertreiber für herkömmliches BIOS initialisierten Netzwerkcontroller anhand voreingestellter Prioritätspegel des Bootens umschaltet, und Netzwerkbooten ausführt.

3. Programm, das einen Computer veranlasst, einen Prozess zur Steuerung eines Netzwerkcontrollers auszuführen, wobei der Prozess umfasst:
Ausführen eines Netzwerkcontroller-Zuweisungssteuertreibers (15), bevor ein Netzwerkcontroller-Steuertreiber für EFI (17) und/oder ein Netzwerkcontroller-Steuertreiber für herkömmliches BIOS (16) den Netzwerkcontroller (5, 6) initialisiert,
wobei der Netzwerkcontroller-Zuweisungssteuertreiber entscheidet, ob der Netzwerkcontroller durch entweder das EFI oder das herkömmliche BIOS zu betreiben ist,
basierend auf voreingestellten Einstelldaten des Netzwerkcontrollers, und
exklusives Ermitteln eines Treibers (13, 14), der ein zur Initialisierung des Netzwerkcontrollers durch den Netzwerkcontroller-Zuweisungssteuertreiber verwendetes Protokoll bereitstellt, wenn die Einstelldaten des Netzwerkcontrollers eine Anweisung zum Initialisieren des Netzwerkcontrollers für das herkömmliche BIOS sind.

4. Programm gemäß Anspruch 3, wobei:
wenn die Einstelldaten des Netzwerkcontrollers eine Anweisung zum Initialisieren des Netzwerkcontrollers für das EFI sind, der Netzwerkcontroller-Steuertreiber für EFI den das Protokoll bereitstellenden Treiber ermittelt und den Netzwerkcontroller initialisiert,
wenn die Einstelldaten des Netzwerk-Controllers die Anweisung sind, den Netzwerk-Controller für das herkömmliche BIOS zu initialisieren, der Netzwerk-Controller-Steuertreiber für das herkömmliche BIOS den Netzwerk-Controller initialisiert, und
eine EFI-System-Firmware (22) den durch den Netzwerk-Controller-Steuertreiber für EFI initialisierten Netzwerk-Controller und den durch den Netzwerk-Controller-Steuertreiber für herkömmliches BIOS initialisierten Netzwerk-Controller anhand voreingestellter Prioritätsniveaus des Bootens umschaltet und Netzwerkbooten durchführt.

5. Informationsverarbeitungsvorrichtung, umfassend:
einen Netzwerk-Controller-Zuweisungssteuertreiber (15), der ausgeführt wird, bevor ein Netzwerk-Controller-Steuertreiber für EFI (17) und/oder ein Netzwerk-Controller-Steuertreiber für herkömmliches BIOS (16) den Netzwerk-Controller (5, 6) initialisiert, und der entscheidet, ob der Netzwerk-Controller entweder durch das EFI oder das herkömmliche BIOS zu betreiben ist, basierend auf voreingestellten Einstelldaten des Netzwerk-Controllers;
wobei der Netzwerk-Controller-Zuweisungssteuertreiber exklusiv einen Treiber (13, 14) ermittelt, der ein zur Initialisierung des Netzwerk-Controllers verwendetes Protokoll bereitstellt, wenn die Einstelldaten des Netzwerk-Controllers eine Anweisung zum Initialisieren des Netzwerk-Controllers für das herkömmliche BIOS sind.

6. Informationsverarbeitungsvorrichtung gemäß Anspruch 5, wobei:
wenn die Einstelldaten des Netzwerk-Controllers eine Anweisung zum Initialisieren des Netzwerk-Controllers für das EFI sind, der Netzwerk-Controller-Steuertreiber für EFI den das Protokoll bereitstellenden Treiber ermittelt und den Netzwerk-Controller initialisiert,
wenn die Einstelldaten des Netzwerk-Controllers eine Anweisung zum Initialisieren des Netzwerk-Controllers für das herkömmliche BIOS sind, der Netzwerk-Controller-Steuertreiber für das herkömmliche BIOS den Netzwerk-Controller initialisiert, und
eine EFI-System-Firmware (22) den durch den Netzwerk-Controller-Steuertreiber für EFI initialisierten Netzwerk-Controller und den durch den Netzwerk-Controller-Steuertreiber für herkömmliches BIOS initialisierten Netzwerk-Controller anhand von voreingestellten Prioritätspegeln des Bootens umschaltet und Netzwerkbooten ausführt.

## Revendications

1. Procédé pour contrôler un contrôleur de réseau, comprenant :
l'exécution d'un pilote de contrôle d'affectation de contrôleur de réseau (15) avant qu'au moins un d'un pilote de contrôle de contrôleur de réseau pour EFI (17) et d'un pilote de contrôle de contrôleur de réseau pour un BIOS hérité (16) n'initialise le contrôleur de réseau (5, 6), le pilote de contrôle d'affectation de contrôleur de réseau décidant si faire fonctionner le contrôleur de réseau par l'un ou l'autre de l'EFI ou du BIOS hérité, sur la base de données de réglage préétablies du contrôleur de réseau ; et
l'acquisition exclusive d'un pilote (13, 14) fournissant un protocole utilisé pour l'initialisation du contrôleur de réseau par le pilote de contrôle d'affectation de contrôleur de réseau lorsque les données de réglage du contrôleur de réseau sont une instruction pour initialiser le contrôleur de réseau pour le BIOS hérité.

2. Procédé pour contrôler un contrôleur de réseau selon la revendication 1, dans lequel :
lorsque les données de réglage du contrôleur de réseau sont une instruction pour initialiser le contrôleur de réseau pour l'EFI, le pilote de contrôle de contrôleur de réseau pour EFI acquiert le pilote fournissant le protocole, et initialise le contrôleur de réseau,
lorsque les données de réglage du contrôleur de réseau sont l'instruction pour initialiser le contrôleur de réseau pour le BIOS hérité, le pilote de contrôle de contrôleur de réseau pour le BIOS hérité initialise le contrôleur de réseau, et
un micrologiciel de système EFI (22) commute le contrôleur de réseau initialisé par le pilote de contrôle de contrôleur de réseau pour EFI et le contrôleur de réseau initialisé par le pilote de contrôle de contrôleur de réseau pour le BIOS hérité selon des niveaux de priorité préétablis d'amorçage, et exécute l'amorçage du réseau.

3. Programme amenant un ordinateur à exécuter un processus pour contrôler un contrôleur de réseau, le processus comprenant :
l'exécution d'un pilote de contrôle d'affectation de contrôleur de réseau (15) avant qu'au moins un d'un pilote de contrôle de contrôleur de réseau pour EFI (17) et d'un pilote de contrôle de contrôleur de réseau pour un BIOS hérité (16) n'initialise le contrôleur de réseau (5, 6), le pilote de contrôle d'affectation de contrôleur de réseau décidant si faire fonctionner le contrôleur de réseau par l'un ou l'autre de l'EFI ou du BIOS hérité, sur la base de données de réglage préétablies du contrôleur de réseau ; et
l'acquisition exclusive d'un pilote (13, 14) fournissant un protocole utilisé pour l'initialisation du contrôleur de réseau par le pilote de contrôle d'affectation de contrôleur de réseau lorsque les données de réglage du contrôleur de réseau sont une instruction pour initialiser le contrôleur de réseau pour le BIOS hérité.

4. Programme selon la revendication 3, dans lequel :
lorsque les données de réglage du contrôleur de réseau sont une instruction pour initialiser le contrôleur de réseau pour l'EFI, le pilote de contrôle de contrôleur de réseau pour EFI acquiert le pilote fournissant le protocole, et initialise le contrôleur de réseau,
lorsque les données de réglage du contrôleur de réseau sont l'instruction pour initialiser le contrôleur de réseau pour le BIOS hérité, le pilote de contrôle de contrôleur de réseau pour le BIOS hérité initialise le contrôleur de réseau, et
un micrologiciel de système EFI (22) commute le contrôleur de réseau initialisé par le pilote de contrôle de contrôleur de réseau pour EFI et le contrôleur de réseau initialisé par le pilote de contrôle de contrôleur de réseau pour le BIOS hérité selon des niveaux de priorité préétablis d'amorçage, et exécute l'amorçage du réseau.

5. Appareil de traitement d'informations, comprenait un pilote de contrôle d'affectation de contrôleur de réseau (15) qui est exécuté avant qu'au moins un d'un pilote de contrôle de contrôleur de réseau pour EFI (17) et d'un pilote de contrôle de contrôleur de réseau pour un BIOS hérité (16) n'initialise le contrôleur de réseau (5, 6), et qui décide si faire fonctionner le contrôleur de réseau par l'un ou l'autre de l'EFI ou du BIOS hérité, sur la base de données de réglage préétablies du contrôleur de réseau ;
dans lequel le pilote de contrôle d'affectation de contrôleur de réseau acquiert exclusivement un pilote (13, 14) fournissant un protocole utilisé pour l'initialisation du contrôleur de réseau lorsque les données de réglage du contrôleur de réseau sont une instruction pour initialiser le contrôleur de réseau pour le BIOS hérité.

6. Appareil de traitement d'informations selon la revendication 5, dans lequel :
lorsque les données de réglage du contrôleur de réseau sont une instruction pour initialiser le contrôleur de réseau pour l'EFI, le pilote de contrôle de contrôleur de réseau pour EFI acquiert le pilote fournissant le protocole, et initialise le contrôleur de réseau,
lorsque les données de réglage du contrôleur de réseau sont l'instruction pour initialiser le contrôleur de réseau pour le BIOS hérité, le pilote de contrôle de contrôleur de réseau pour le BIOS hérité initialise le contrôleur de réseau, et
un micrologiciel de système EFI (22) commute le contrôleur de réseau initialisé par le pilote de contrôle de contrôleur de réseau pour EFI et le contrôleur de réseau initialisé par le pilote de contrôle de contrôleur de réseau pour le BIOS hérité selon des niveaux de priorité préétablis d'amorçage, et exécute l'amorçage du réseau.
